**Europäisches Patentamt**

**European Patent Office**

**Office européen des brevets**

(11) Veröffentlichungsnummer: **0 153 420**
**A1**

## (12) EUROPÄISCHE PATENTANMELDUNG

(21) Anmeldenummer: **83112857.4**

(22) Anmeldetag: **21.12.83**

(51) Int. Cl.⁴: **F 16 K 47/04**

(43) Veröffentlichungstag der Anmeldung:
**04.09.85 Patentblatt 85/36**

(84) Benannte Vertragsstaaten:
**DE FR GB IT SE**

(71) Anmelder: **Vickers Systems GmbH**
**Frölingstrasse 41**
**D-6380 Bad Homburg(DE)**

(72) Erfinder: **Schräger, Knut, Dipl.-Ing.**
**Dietigheimstrasse 3**
**D-6380 Bad Homburg(DE)**

(72) Erfinder: **Deppner, Harald**
**Schwalbacher Strasse 1**
**D-6380 Bad Homburg(DE)**

(74) Vertreter: **Blumbach Weser Bergen Kramer Zwirner**
**Hoffmann Patentanwälte**
**Sonnenbergerstrasse 43**
**D-6200 Wiesbaden 1(DE)**

(54) **Drosselventil.**

(57) Drosselventil mit einer Ventilkammer (40), wobei jeder zu- und abfließende Stromfaden jeweils zwei Drosselstellen (z.B. 62, 64 bzw. 63, 65) zu passieren hat. Die Drosselstellen (62 bis 65) der zu- bzw. abfließenden Stromfäden sind symmetrisch zueinander angeordnet, so daß bei einer Umkehr der Durchströmungsrichtung gleichartige Verhältnisse angetroffen werden.

Fig 2

## Drosselventil

Die Erfindung bezieht sich auf ein Drosselventil mit den Merkmalen des Oberbegriffs des Anspruchs 1.

Bei derartigen, handelsüblichen Drosselventilen erfolgt die Strömung zur Drosselstelle entweder axial und die Abströmung radial oder in umgekehrter Richtung, die Zuströmung radial und die Abströmung axial. Wenn ein derartiges Drosselventil in eine hydraulische Schaltung einbezogen ist, in welcher beide Strömungsrichtungen vorkommen, dann erweist sich das Drosselventil für eine bestimmte, eingestellte Stellung nicht strömungsrichtungsunabhängig hinsichtlich seines Drosselwertes.

Der Erfindung liegt die Aufgabe zugrunde, ein Drosselventil zu schaffen, dessen Charakteristik für beide Durchströmungsrichtungen weitgehend gleich ist.

Die gestellte Aufgabe wird dadurch gelöst, daß die Steuerkante und die drosselnden Teile der Zu- und Abfuhrkanäle im Bereich einer gemeinsamen Rotationsoberfläche angeordnet und in dieser Rotationsoberfläche zur Achse hin gleichmäßig verteilt angeordnet sind. Es sind vorzugsweise zwei Zufuhrkanäle und zwei Abfuhrkanäle vorgesehen, die zu bzw. von der Ventilkammer strebend angeordnet sind, welche eine gemeinsame Achse mit der Achse der Rotationsoberfläche aufweisen.

In dieser von der Hydraulikflüssigkeit durchströmten Ventilkammer bildet sich der mittlere Druck zwischen Eingangs- und Ausgangsdruck aus. Bei Druckumkehr wird immer das gleiche Verhalten beobachtet, d.h. man erhält eine weitgehend gleichbleibende dynamische und stationäre Ventilcharakteristik unabhängig von der Strömungsrichtung. Am Ventil selbst sind die dynamischen Strömungskräfte weitgehend ausgeglichen. Ein weiterer Vorteil liegt darin, daß die Druckschwingungen der Hydraulikflüssigkeit das Stabilitätsverhalten des Drosselventils weniger stark beeinträchtigen als bei den eingangs beschriebenen bekannten Drosselventilen.

Ein Ausführungsbeispiel der Erfindung wird anhand der Zeichnung beschrieben. Dabei zeigt:

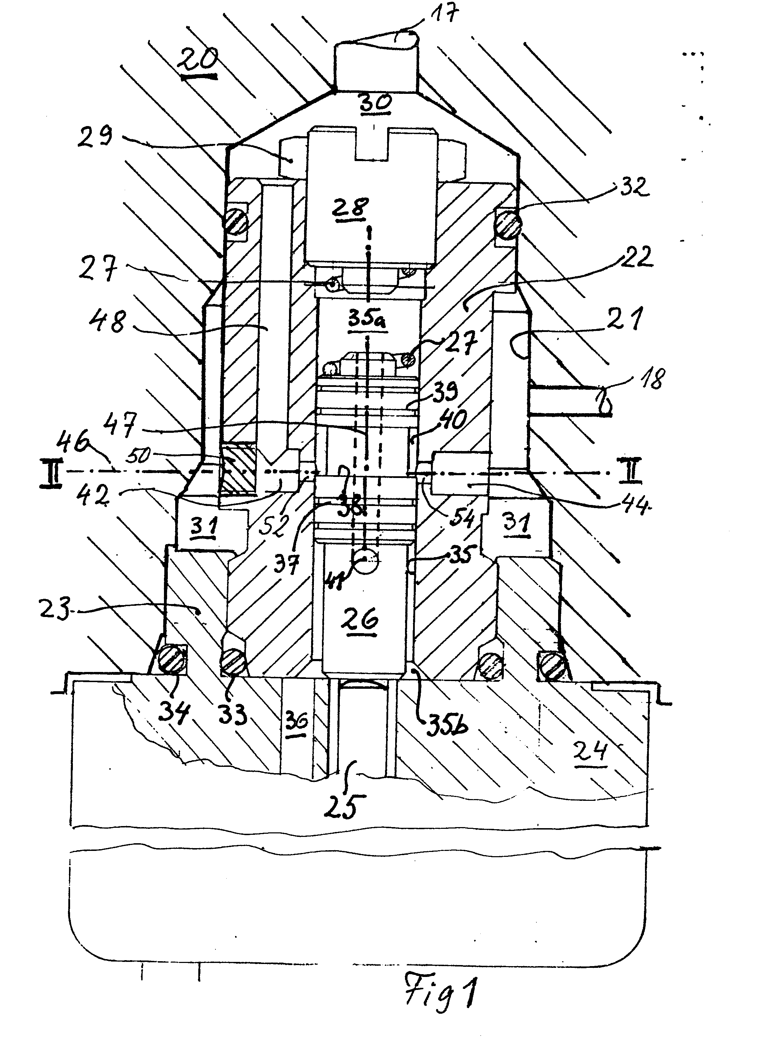

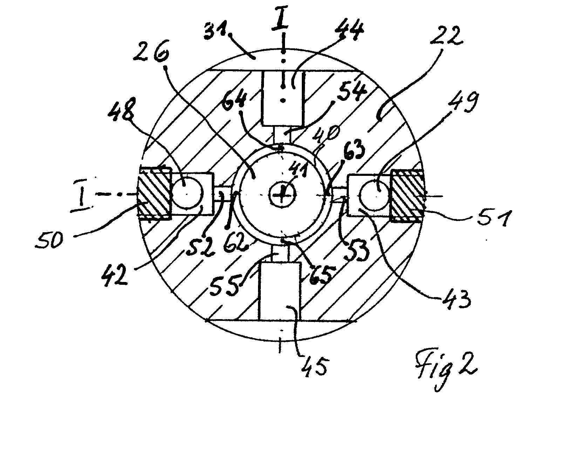

Fig. 1 einen Längsschnitt durch ein Drosselventil gemäß I-I in Fig. 2 und

Fig. 2 einen Querschnitt durch das Drosselventil gemäß II-II in Fig. 1.

Das Drosselventil weist ein schematisch angedeutetes Gehäuse 20 auf, welches eine Stufenbohrung 21 besitzt, in welcher eine Gehäusehülse 22 aufgenommen ist. In der Stufenbohrung 21 ist ferner ein Magnetgehäuse 23 eingeschraubt, welches stark verkürzt dargestellt ist und einen steuerbaren Elektromganeten 24 aufnimmt, dessen Anker 25 die Stellung eines Schieberkolbens 26 bestimmt, der mittels einer Ventilfeder 27 gegen den Anker 25 gedrängt wird. Eine Stellschraube 28 ist in die Gehäusehülse 22 eingeschraubt und bildet einen Federsitz für die Ventilfeder 27, deren Federkraft somit eingestellt werden kann. Die eingestellte Stellung kann mit einer Kontermutter 29 gesichert werden. Die Teile 24 und 25 stellen eine Verschiebeeinrichtung und die Ventilfeder 27 eine Rückholeinrichtung für den Schieberkolben 26 dar.

Zwischen dem Ventilgehäuse 20 und der Gehäusehülse 22 liegen zwei Kammern 30 und 31, die den Einlaß und Auslaß des Ventils bilden und demgemäß jeweils mit einer Arbeitsleitung über Anschlüsse 17, 18 verbunden sind. Ringdichtungen 32, 33, 34 sorgen für einen druckmitteldichten Abschluß gegeneinander, nach außen sowie gegenüber dem Hülseninnenraum 35, der über einen Kanal 36 gewöhnlich mit dem Tankdruck verbunden ist. Der Schieberkolben 26 besitzt eine Kolbenfläche 37 mit einer Steuerkante 38 sowie eine weitere Kolbenfläche 39. Zwischen den Kolbenflächen 37, 39 und der Innenwandung der Gehäusehülse 22 ist eine ringförmige Ventilkammer 40 gebildet, wodurch der Hülseninnenraum 35 in zwei Bereiche 35a, 35b geteilt wird. Diese beiden Bereiche 35a, 35b stehen über einen teilweise axial und teilweise radial sich erstreckenden Verbindungskanal 41 miteinander in Verbindung.

Die ringförmige Ventilkammer 40 besitzt vier radiale, stufenförmige Zu- und Abfuhrkanäle 42, 43, 44, 45, die gleichmäßig verteilt in einer Rotationsoberfläche 46 angeordnet sind, die symmetrisch zur Achse 47 des Ventils liegt. Als Rotationsoberfläche 46 wird die zur Achse 47 senkrechte Fläche, in welche die Achsen der Zu- und Abfuhrkanäle 42 bis 45 angeordnet sind, bevorzugt, da alsdann die dynamischen Kräfte auf den Schieberkolben 26 am geringsten sind. Ferner sind die stationären Kräfte unabhängig von der Strömungsrichtung. In der Gehäusehülse 22 sind zwei axial sich erstreckende Kanäle 48 und 49 vorgesehen, welche die Zu- oder Abfuhrkanäle 42 und 43 mit der Kammer 30 verbinden, während die Zu- oder Abfuhrkanäle 44 und 45 unmittelbar mit der Kammer 31 verbunden sind. Stopfen 50, 51 sperren die Verbindung der Kanäle 42, 43 zu der Kammer 31.

Es sei angenommen, daß der Anschluß 17 druckführend ist, so daß die Kammer 30 den Einlaß des Ventils darstellt. Die Hydraulikflüssigkeit strömt dann praktisch ohne Druckverlust über die Kanäle 48 und 49 zu den radial äußeren Abschnitten der Kanäle 42 und 43, und von dort über enge Einmündungsabschnitte 52, 53 in die Ventilkammer 40. Je nach der Stellung der Steuerkante 38 erfolgt dabei eine stärkere oder schwächere Drosselung des jeweiligen Stromfadens. Dieser gelangt ein zweites Mal an der Steuerkante 38 vorbei radial nach außen in die Einmündungsabschnitte 54, 55, wobei wiederum ein Drosseleffekt erzielt wird. Es sind demnach vier Drosselstellen 62 bis 65 vorhanden, wovon die Drosselstellen 62 und 63 radial von außen nach innen und die Drosselstellen 64 und 65 radial von innen nach außen durchströmt werden. Die Drosselstellen 62, 63 sowie die Drosselstellen 64, 65 liegen einander jeweils gegenüber und insgesamt sind die nach innen und außen durchströmten Drosselstellen abwechselnd und im gleichen Winkelabstand zueinander angeordnet. Bei diesen symmetrischen Verhältnissen stellt sich in der Ventilkammer 40 der mittlere Druck zwischen Einlaß und Auslaß ein.

Wenn das Drosselventil in der umgekehrten Richtung durchströmt wird, also der Anschluß 18 druckführend ist, werden die Kanäle 44, 45 radial von außen nach innen und die Kanäle 42, 43 radial von innen nach außen durchströmt, wobei die Strömungsverhältnisse völlig gleichartig zum zuerst behandelten Fall sind, lediglich ist das Strömungsmuster um 90° gedreht. Dies führt jedoch wegen der symmetrischen Anordnung der Kanäle zu keiner Änderung des Drosselwertes. Dieser hängt allein von der Stellung der Steuerkante 38 ab.

Die Anzahl der Zu- und Abfuhrkanäle 42 bis 45 kann abweichen. Wichtig ist, daß die Kanäle symmetrisch verteilt angeordnet sind. Die Einmündungsabschnitte 52 bis 55 der Zu- und Abfuhrkanäle 42 bis 45 werden gegebenenfalls in axialer Richtung schlitzförmig ausgebildet, wenn ein größerer Stellweg des Schieberkolbens 26 erforderlich ist. Statt der Stufenform der Zu- und Abfuhrkanäle 42 bis 45 ist auch eine sich verjüngende Ausbildung möglich.

Das Drosselventil kann auch eine Verschlußstellung einnehmen, wenn der Schieberkolben 26 entsprechend weit verschoben wird.

## Patentansprüche

1.      Drosselventil,
mit einem Gehäuse (20), welches eine Ventilkammer (40)
sowie wenigstens einen Zu- und Abfuhrkanal (42 bis 45)
aufweist, mit einem Ventilschieber (26), der wenigstens
eine Steuerkante (38) aufweist, die mit dem Zu- und Abfuhrkanal eine Drossel bildet,
mit einer Rückholeinrichtung (27) und
mit einer Verschiebeeinrichtung (24, 25), deren Stellung die Weite der Drossel bestimmt,
gekennzeichnet durch folgende Merkmale:
der oder die Zufuhr- und Abfuhrkanäle (42, 43, 44, 45)
sind gleichmäßig um die Ventilkammer (40) verteilt im
Bereich einer gemeinsamen Rotationsoberfläche (46) angeordnet, deren Achse mit der Ventilachse (47) bzw.
der Ventilkammer (40) zusammenfällt;
jeder Stromfaden erreicht und verläßt die Ventilkammer
(40) über zwei gleichartige Drosselstellen (62, 63, 64,
65), die zwischen den Einmündungsabschnitten (52, 53,
54, 55) des oder der Zufuhr- und Abfuhrkanäle (42, 43,
44, 45) und der Steuerkante (38) gebildet werden.

2.      Drosselventil nach Anspruch 1,
dadurch gekennzeichnet, daß die Rotationsoberfläche
(46) eine radiale Ebene senkrecht zur Ventilachse (47)
ist.

3.      Drosselventil nach Anspruch 2,
dadurch gekennzeichnet, daß zwei radiale Zufuhrkanäle
(z.B. 42, 43) und zwei radiale Abfuhrkanäle (z.B. 44,
45) vorgesehen sind.

4.      Drosselventil nach einem der Ansprüche
1 bis 3,
dadurch gekennzeichnet, daß die Einmündungsabschnitte (52 bis 55) gegenüber dem Rest der Zu- und Abfuhrkanäle (42 bis 45) jeweils einen engeren Querschnitt aufweisen.

Fig 1

Fig 2

## EUROPÄISCHER RECHERCHENBERICHT

EP  83 11 2857

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | GB-A-1 198 961  (CONFLOW) <br> * Figuren 1, 2 * | 1,2,4 | F 16 K  47/04 |
| X | DE-C-1 157 090  (DAIMLER-BENZ) <br> * Figur 1 * | 1,2,4 | |
| A | DE-A-2 919 364  (HEILMEIER & WEINLEIN) <br> * Figuren 1-3 * | 1-3 | |
| A | US-A-2 994 347  (GOTTWALD) <br> * Figur 15 * | 1,3 | |
| A | US-A-2 902 054  (McCULLOCH) | | |
| A | DE-C-  908 528  (JUNKERS & CO.) | | |

RECHERCHIERTE SACHGEBIETE (Int. Cl. ³)

F 16 K  39/00
F 16 K  47/00

Der vorliegende Recherchenbericht wurde für alle Patentansprüche erstellt.

| Recherchenort | Abschlußdatum der Recherche | Prüfer |
|---|---|---|
| BERLIN | 17-07-1984 | SCHLABBACH M |